# EUROPEAN PATENT APPLICATION

(11) **EP 4 506 144 A1**
(43) Date of publication of application: **12.02.2025**
(21) Application number: 24156507.6
(22) Date of filing: 08.02.2024
(51) Int. Cl.: B29C 64/153, B29C 64/218, B33Y 30/00, B22F 10/28, B22F 12/63, B28B 1/00

(54) **CERAMIC ROLLER FOR POWDER SPREADING**

(30) Priority: 09.08.2023 US 202318446518
(71) Applicant: II-VI Delaware, Inc., Wilmington, Delaware 19801 (US)
(72) Inventor: Karandikar, Prashant, Winchester, CA 92596 (US); Erwin, Bradley, Hemet, CA 92545 (US)
(74) Representative: Forresters IP LLP

(57) **Abstract**

A system for additive manufacturing of a three-dimensional object includes a powder compaction apparatus having at least one compaction roller configured to spread and compact a powder material across a powder bed, and a printing apparatus configured to selectively bind or fuse the powder material. At least a portion of the at least one compaction roller is made from silicon carbide. The at least one compaction roller includes a work zone having a first end and a second end, a first bearing zone extending from the first end of the work zone, and a second bearing zone extending from the second end of the work zone. The work zone has a surface finish of less than 50 microinches Ra. At least one of the first bearing zone and the second bearing zone are formed monolithically with the work zone, or connected to the work zone via a joint.

## Description

### BACKGROUND

### 1. Field

This disclosure relates to a roller configured for use in an additive manufacturing process, and in particular, to a ceramic roller for powder spreading and compacting in an additive manufacturing process. A method of manufacturing the roller is also disclosed.

### 2. Technical Considerations

Additive manufacturing, also referred to as three-dimensional (3D) printing, is a manufacturing technique that is based on a controlled deposition of material in successive layers to define a 3D object. In some additive manufacturing processes, rollers are used to spread successive thin layers of a powder material on a build bed. The compacted powder material is then selectively fused, such as using a binder or a laser or other form of energy, to define a layer of the 3D object. The build bed is then lowered and the spreading/compacting process is repeated to create another layer of powder material. The process of successively building a plurality of layers is continued until the desired 3D object is formed.

Rollers used in 3D printing machines are configured to spin around their rotation axis and traverse in a direction perpendicular to the rotation axis. Such roller movement is configured to build a layer of powder material that has a uniform thickness (50 to 200 µm) and a desired packing density (typically expressed in g/cc and representative of a geometric density of powder material). The packing density achieved by a roller is critical in determining the material properties of the printed 3D object, including, without limitation, density, elastic modulus, strength, thermal conductivity, coefficient of thermal expansion, and other material properties. Higher packing is desired to achieve better structural properties of the printed 3D object.

Conventional rollers used in 3D printing machines are made of metal or plastic. Such metal or plastic rollers wear over time and, especially rapidly, when used for spreading harder metal or ceramic powders. These rollers have to be replaced often (e.g. within several weeks) when used for spreading ceramic powders, such as silicon carbide, resulting in equipment down time and high maintenance cost. Metal or plastic rollers also require coatings such as a low friction, polytetrafluoroethylene (PTFE) coating, to avoid powder sticking or embedding.

Examples of conventional rollers include rollers made of aluminum (bare metal or coated with a PTFE coating), or steel coated with alumina. PTFE-coated aluminum rollers are expensive and require frequent replacement (approximately 1-2 months), thereby adding to a significant equipment downtime and cost. Alumina-coated steel rollers have undesirable surface roughness that results in low packing density. Accordingly, there is a need in the art for an improved roller for spreading a powder material in a 3D printing machine with improved powder density and long roller life.

### SUMMARY

Disclosed herein are non-limiting embodiments or aspects of a system for additive manufacturing of a three-dimensional object. The system may include a powder compaction apparatus having at least one compaction roller configured to spread and compact a powder material across a powder bed; and a printing apparatus configured to selectively bind or fuse the powder material. At least a portion of the at least one compaction roller may be made from silicon carbide.

In some non-limiting embodiments or aspects, the silicon carbide may be a reaction-bonded silicon carbide. At least a portion of the at least one compaction roller may have a surface finish of less than 50 microinches Ra.

In some non-limiting embodiments or aspects, the at least one compaction roller may include a work zone having a first end and a second end, a first bearing zone extending from the first end of the work zone, and a second bearing zone extending from the second end of the work zone. The work zone may have a surface finish of less than 50 microinches Ra. The work zone may be cylindrical with a circular cross-section. At least one of the first bearing zone and the second bearing zone may be formed monolithically with the work zone.

In some non-limiting embodiments or aspects, at least one of the first bearing zone and the second bearing zone may be made from a material different than the work zone. The work zone may be made from silicon carbide and the first bearing zone and the second bearing zone may be made from metal. The first bearing zone may be connected to the first end of the work zone via a first joint, and the second bearing zone may be connected to the second end of the work zone via a second joint. At least one of the first joint and the second joint may be one of a butt joint, a tongue-and-groove joint, a threaded joint, and a pinned joint.

In some non-limiting embodiments or aspects, the compaction roller may be configured to spin around a longitudinal axis and traverse in a direction perpendicular to the longitudinal axis. The system may further include a powder dispensing apparatus configured to dispense a predetermined amount of the powder material on a top surface of the powder bed.

In some non-limiting embodiments or aspects, a system for additive manufacturing of a three-dimensional object may include a powder compaction apparatus having at least one compaction roller configured to spread and compact a powder material across a powder bed; and a printing apparatus configured to selectively bind or fuse the powder material. The at least one compaction roller may include a cylindrical work zone having a first end and a second end, a first bearing zone extending from the first end of the work zone, and a second bearing zone extending from the second end of the cylindrical work zone. The cylindrical work zone may be made from silicon carbide and may have a surface finish of less than 50 microinches Ra.

In some non-limiting embodiments or aspects, the first bearing zone may be connected to the first end of the work zone via a first joint, and the second bearing zone may be connected to the second end of the work zone via a second joint. At least one of the first joint and the second joint may be one of a butt joint, a tongue-and-groove joint, a threaded joint, and a pinned joint.

In some non-limiting embodiments or aspects, a compaction roller configured for use in a system for additive manufacturing of a three-dimensional object may include a cylindrical work zone having a first end and a second end, a first bearing zone extending from the first end of the work zone, and a second bearing zone extending from the second end of the cylindrical work zone. At least the cylindrical work zone may be made from silicon carbide, and the cylindrical work zone may have a surface finish of less than 50 microinches Ra.

In some non-limiting embodiments or aspects, at least one of the first bearing zone and the second bearing zone may be formed monolithically with the work zone.

In some non-limiting embodiments or aspects, the first bearing zone may be connected to the first end of the work zone via a first joint, and the second bearing zone may be connected to the second end of the work zone via a second joint. At least one of the first joint and the second joint may be one of a butt joint, a tongue-and-groove joint, a threaded joint, and a pinned joint.

Additional embodiments or aspects of the present disclosure are detailed in one or more of the following clauses:
Clause 1: A system for additive manufacturing of a three-dimensional object, the system comprising: a powder compaction apparatus comprising at least one compaction roller configured to spread and compact a powder material across a powder bed; and a printing apparatus configured to selectively bind or fuse the powder material; wherein at least a portion of the at least one compaction roller is made from silicon carbide.
Clause 2: The system according to clause 1, wherein the silicon carbide is a reaction-bonded silicon carbide.
Clause 3: The system according to clause 1 or 2, wherein at least a portion of the at least one compaction roller has a surface finish of less than 50 microinches Ra.
Clause 4: The system according to any one of clauses 1 to 3, wherein the at least one compaction roller comprises a work zone having a first end and a second end, a first bearing zone extending from the first end of the work zone, and a second bearing zone extending from the second end of the work zone.
Clause 5: The system according to clause 4, wherein the work zone has a surface finish of less than 50 microinches Ra.
Clause 6: The system according to clause 4 or 5, wherein the work zone is cylindrical with a circular cross-section.
Clause 7: The system according to any one of clauses 4 to 6, wherein at least one of the first bearing zone and the second bearing zone are formed monolithically with the work zone.
Clause 8: The system according to any one of clauses 4 to 7, wherein at least one of the first bearing zone and the second bearing zone are made from a material different than the work zone.
Clause 9: The system according to any one of clauses 4 to 8, wherein the work zone is made from silicon carbide and wherein the first bearing zone and the second bearing zone are made from metal.
Clause 10: The system according to any one of clauses 4 to 9, wherein the first bearing zone is connected to the first end of the work zone via a first joint, and wherein the second bearing zone is connected to the second end of the work zone via a second joint.
Clause 11: The system according to clause 10, wherein at least one of the first joint and the second joint is one of a butt joint, a tongue-and-groove joint, a threaded joint, and a pinned joint.
Clause 12: The system according to any one of clauses 1 to 11, wherein the compaction roller is configured to spin around a longitudinal axis and traverse in a direction perpendicular to the longitudinal axis.
Clause 13: The system according to any one of clauses 1 to 12, further comprising a powder dispensing apparatus configured to dispense a predetermined amount of the powder material on a top surface of the powder bed.
Clause 14: A system for additive manufacturing of a three-dimensional object, the system comprising: a powder compaction apparatus comprising at least one compaction roller configured to spread and compact a powder material across a powder bed; and a printing apparatus configured to selectively bind or fuse the powder material; wherein the at least one compaction roller comprises a cylindrical work zone having a first end and a second end, a first bearing zone extending from the first end of the work zone, and a second bearing zone extending from the second end of the cylindrical work zone; wherein the cylindrical work zone is made from silicon carbide and has a surface finish of less than 50 microinches Ra.
Clause 15: The system according to clause 14, wherein the first bearing zone is connected to the first end of the work zone via a first joint, and wherein the second bearing zone is connected to the second end of the work zone via a second joint.
Clause 16: The system according to clause 15, wherein at least one of the first joint and the second joint is one of a butt joint, a tongue-and-groove joint, a threaded joint, and a pinned joint.
Clause 17: A compaction roller configured for use in a system for additive manufacturing of a three-dimensional object, the compaction roller comprising: a cylindrical work zone having a first end and a second end; a first bearing zone extending from the first end of the work zone; and a second bearing zone extending from the second end of the cylindrical work zone, wherein at least the cylindrical work zone is made from silicon carbide, and wherein the cylindrical work zone has a surface finish of less than 50 microinches Ra.
Clause 18: The compaction roller according to clause 17, wherein at least one of the first bearing zone and the second bearing zone are formed monolithically with the work zone.
Clause 19: The compaction roller according to clause 17 or 18, wherein the first bearing zone is connected to the first end of the work zone via a first joint, and wherein the second bearing zone is connected to the second end of the work zone via a second joint.
Clause 20: The system according to clause 19, wherein at least one of the first joint and the second joint is one of a butt joint, a tongue-and-groove joint, a threaded joint, and a pinned joint.

### BRIEF DESCRIPTION OF THE DRAWINGS

FIG. 1 is a side cross-sectional view of an additive manufacturing device in accordance with an embodiment or aspect of the present disclosure;
FIG. 2 is a chart showing packing density as a function of time for a variety of rollers used in an additive manufacturing device;
FIG. 3 is a top view of a roller configured for use with an additive manufacturing device in accordance with an embodiment or aspect of the present disclosure;
FIG. 4 is a top view of a roller configured for use with an additive manufacturing device in accordance with another embodiment or aspect of the present disclosure;
FIG. 5 is a top view of a roller configured for use with an additive manufacturing device in accordance with another embodiment or aspect of the present disclosure;
FIG. 6 is a top view of a roller configured for use with an additive manufacturing device in accordance with another embodiment or aspect of the present disclosure; and
FIGS. 7A-7D are graphs showing surface roughness for rollers made of various materials.

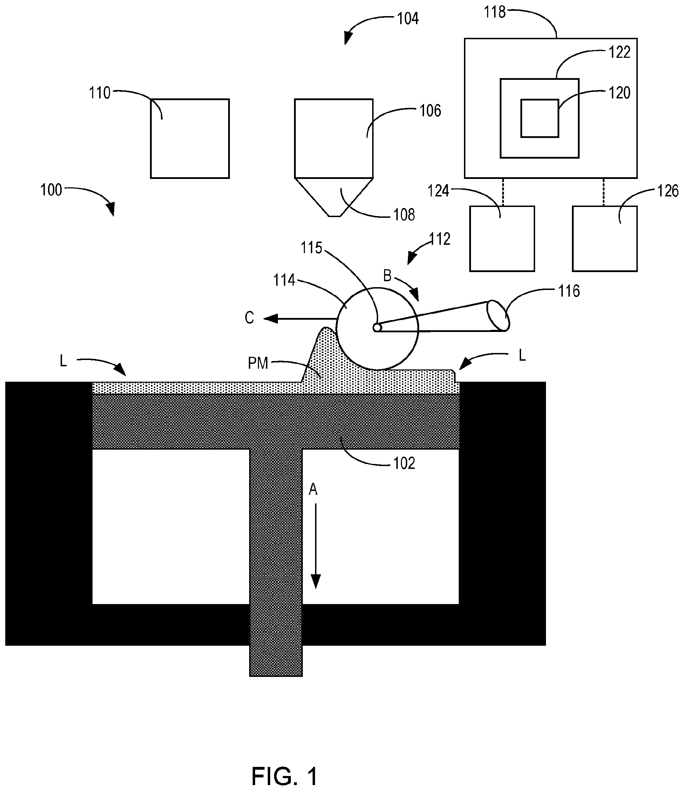

In FIGS. 1-7D, like characters refer to the same components and elements, as the case may be, unless otherwise stated.

### DESCRIPTION

As used herein, the singular form of "a", "an", and "the" include plural referents unless the context clearly dictates otherwise.

Spatial or directional terms, such as "left", "right", "inner", "outer", "above", "below", and the like, relate to the embodiments or aspects as shown in the drawing figures and are not to be considered as limiting as the embodiments or aspects can assume various alternative orientations.

All numbers used in the specification and claims are to be understood as being modified in all instances by the term "about". By "about" is meant plus or minus twenty-five percent of the stated value, such as plus or minus ten percent of the stated value. However, this should not be considered as limiting to any analysis of the values under the doctrine of equivalents.

Unless otherwise indicated, all ranges or ratios disclosed herein are to be understood to encompass the beginning and ending values and any and all subranges or subratios subsumed therein. For example, a stated range or ratio of "1 to 10" should be considered to include any and all subranges or subratios between (and inclusive of) the minimum value of 1 and the maximum value of 10; that is, all subranges or subratios beginning with a minimum value of 1 or more and ending with a maximum value of 10 or less. The ranges and/or ratios disclosed herein represent the average values over the specified range and/or ratio.

The terms "first", "second", and the like are not intended to refer to any particular order or chronology, but refer to different conditions, properties, or elements.

All documents referred to herein are "incorporated by reference" in their entirety.

The term "at least" is synonymous with "greater than or equal to".

The term "not greater than" is synonymous with "less than or equal to".

Some non-limiting embodiments or aspects may be described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

As used herein, "at least one of' is synonymous with "one or more of'. For example, the phrase "at least one of A, B, or C" means any one of A, B, or C, or any combination of any two or more of A, B, or C. For example, "at least one of A, B, or C" includes A alone; or B alone; or C alone; or A and B; or A and C; or B and C; or all of A, B, and C.

The term "includes" is synonymous with "comprises".

With reference to FIG. 1, a system 100 for additive manufacturing of a three-dimensional (3D) object is shown in accordance with one non-limiting embodiment or aspect of the present disclosure. In some embodiments or aspects, the system 100 may be configured as a binder jetting system, wherein an unbound powder material PM, also referred to herein as "powder" or "powder material", is spread on a powder bed 102 in a very thin layer (50 µm to 200 µm) and a binding agent is selectively applied to the powder material PM to bind the particles together, thereby forming a layer L of a solid object. After a plurality of layers L are built, the resulting 3D object may undergo additional post-processing steps, such as sintering, to achieve desired strength and properties. Such additional post-processing steps may be configured to decrease or remove the void spaces between the particles of the powder material PM and increase the density of the finished 3D object.

While FIG. 1 and the following disclosure describe a binder jetting system such as a metal binder jetting system, a ceramic binder jetting system, or a plastic binder jetting system, it should be understood that other embodiments of the system are not limited to the binder jetting system disclosed herein. For example, in some embodiments or aspects, the system 100 may be configured as a selective laser sintering or a selective laser melting system. In such a system, the powder material PM is heated by a laser, thereby causing the particles to fuse together and build up the desired object layer by layer. In further embodiments, the system 100 is directed to any additive manufacturing system that is configured for manufacturing a 3D object from powder material that is spread layer-by-layer.

With continued reference to FIG. 1, the system 100 includes a powder dispensing apparatus 104 configured to dispense a predetermined amount of the powder material PM on a top surface of the powder bed 102. The powder bed 102 is movable in a direction of arrow A after each layer L of the powder material PM is spread and the binding agent is dispensed to selectively bind the unbound powder material PM. The powder dispensing apparatus 104 may have a powder source 106 configured for containing a bulk quantity of the powder material PM and a dispensing mechanism 108 configured for selectively dispensing a predetermined amount of the powder material PM on the powder bed 102. The dispensing mechanism 108 may be configured to dispense the powder material PM in a pile that is configured to be leveled and compacted. In some embodiments, the powder source 106 may be a hopper, while the dispensing mechanism 108 may be a metering device configured to dispense a predetermined quantity of the powdered material from the powder source 106.

In some embodiments, the powder material PM may be a metal powder material, such as, without limitation, stainless steel, tungsten, cobalt, nickel, chromium, or rhenium. In other embodiments, the powder material PM may be a ceramic powder material, such as, without limitation, silicon carbide (SiC), aluminum oxide, tungsten carbide, aluminum nitride, or silicon nitride. In further embodiments, the powder material PM may be a plastic powder material, such as, without limitation, Nylon, PBT (polybutylene terephthalate), PEEK (polyEtherEtherKetone), or PP (polypropylene). In various examples, the powder material PM may have an average particle size of 0.1 µm to 2000 µm.

With continued reference to FIG. 1, the system 100 may include a printing apparatus 110 configured to selectively dispense a binding agent onto the layer L of the powder material PM. The binding agent may be a liquid binding agent that is deposited onto the layer L of the powder material PM in a two-dimensional pattern that is representative of a layer of the 3D object. In some embodiments, the binding agent may be a two-part binding agent comprising two components that, when combined, react to bind the unbound powder material PM. In further embodiments, the binding agent may be an ultraviolet (UV)-curable binding agent that is configured to bind the unbound powder material PM upon exposure to UV light.

With continued reference to FIG. 1, the system 100 further includes a powder compaction apparatus 112 configured for compacting the powder material PM into the layer L of the powder material PM before the binding material is deposited. The powder compaction apparatus 112 includes at least one compaction roller 114 configured to spread and compact the powder material PM across the powder bed 102. In some embodiments, the at least one compaction roller 112 may be configured to spin around a longitudinal axis 115 in a direction of arrow B and traverse in a direction perpendicular to the longitudinal axis 115 in a direction of arrow C and parallel to a plane defined by the powder bed 102. The powder compaction apparatus 112 may have a drive mechanism 116 configured for driving the rotational and translational movement of the at least one compaction roller 112. In some embodiments, the drive mechanism 116 may be an electric motor.

With continued reference to FIG. 1, the system 100 has a controller 118 operatively connected to at least one of the powder dispensing apparatus 104, the printing apparatus 110, and the powder compaction apparatus 112. The controller 118 may have a processor 120 having a memory 122 containing instructions that, when executed by the processor 120, control the operation of at least one of the powder dispensing apparatus 104, the printing apparatus 110, and the powder compaction/spreading apparatus 112. The controller 118 may be connected to one or more input devices 124 and/or output devices 126. The one or more input devices 124 may include, for example, a keyboard, a mouse, one or more buttons, one or more input terminals, or other input devices for inputting instructions to the controller 118. The one or more output devices 126 may include, for example, one or more displays, lights or other output devices configured for outputting information about one or more parameters of the system 100, such as, without limitation, a progress of the 3D printing operation and/or a status of one or more components of the system 100.

In some embodiments, the controller 118 may be configured to control the operation of the dispensing mechanism 108 to dispense a predetermined quantity of the powder material PM from the powder source 106. In further embodiments, the controller 118 may be configured to control the operation of the printing apparatus 110 to dispense a predetermined quantity of the binder agent in select locations on the layer L of the powder material PM. In further embodiments, the controller 118 may be configured to control operation of the at least one compaction/spreading roller 114, such as the rotation and/or translation of the at least one compaction/spreading roller 114 via operation of the drive mechanism 116.

As the powder compaction apparatus 112 spreads the powder material PM via the compaction roller 114, it is desirable to increase the packing density, which is representative of how tightly packed the particles of the powder material are. Packing density of the unbound powder material PM is critical in determining the characteristics of the final 3D object, such as the object's density, elastic modulus, strength, thermal conductivity, coefficient of thermal expansion, and other mechanical properties. Additionally, it is desirable to have uniform packing density across the powder bed 102 in order to prevent warping of the 3D object due to non-uniform shrinkage during, for example, a sintering operation. Therefore, higher packing of the powder material is desired to achieve better mechanical properties of the final 3D object. However, an increase in packing density increases wear on the at least one compaction roller 114. As described herein, the at least one compaction roller 114 may be configured to spread the powder material PM in a layer L having a uniform thickness and high geometric density while having a long service life through careful selection of the material of the at least one compaction roller 114.

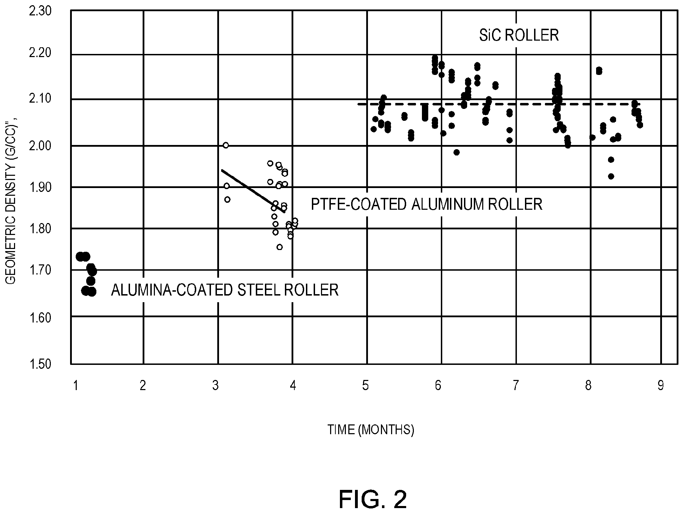

In some embodiments, at least a portion of the compaction roller 114 may be made from a ceramic material. Specifically, at least a portion of the compaction roller 114 may be made from a silicon carbide (SiC) material, which is chosen for its hardness and resistance to abrasion and wear due to contact with the powder material PM. In some embodiments, the SiC material may be a reaction-bonded SiC material. A reaction bonded SiC material is made by infiltrating a SiC powder preform with molten Si. Examples of other forms of SiC include sintered SiC, hot pressed SiC, and chemical vapor deposited SiC. With reference to FIG. 2, the compaction roller 114 made of SiC material maintains powder packing density for months of continuous use, whereas the powder packing density produced by a PTFE-coated aluminum roller quickly degrades in just 1-2 months of use, thereby requiring shutting down the equipment to replace the roller. Experimental data shows that the compaction roller 114 made of SiC material has uniform packing density for over 6 months of continuous use without appreciable degradation in performance.

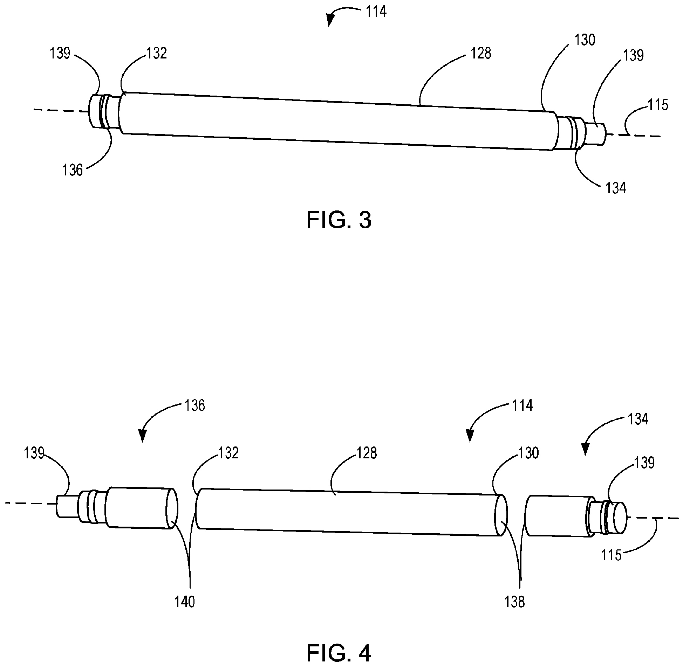

With reference to FIG. 3, the compaction roller 114 includes a work zone 128 having a first end 130 spaced apart from a second end 132 along the longitudinal axis 115. The work zone 128 is cylindrical with a circular cross-section. In some embodiments, the work zone 128 is configured to contact and compact the powder material PM during operation of the compaction roller 114. The compaction roller 114 further has a first bearing zone 134 extending axially from the first end 130 and a second bearing zone 136 extending axially from the second end 132 of the work zone 128. The first and second bearing zones 134, 136 are axially aligned with the work zone 128 to maintain cylindricity of the work zone 128. Each of the first and second bearing zones 134, 136 is configured to rotatably support the compaction roller 114 on the powder compaction apparatus 112 such that the compaction roller 114 can rotate about the longitudinal axis 115 and translate in the direction of arrow C in FIG. 1. As shown in FIG. 3, each of the first and second bearing zones 134, 136 may have one or more bearing surfaces 139 for rotatably support the compaction roller 114 on the powder compaction apparatus 112. At least one of the first bearing zone 132 and the second bearing zone 134 may be formed monolithically with the work zone 128. For example, the entire compaction roller 114, including the work zone 128, the first bearing zone 132, and the second bearing zone 134 may be formed as a single, monolithic piece made from the SiC material.

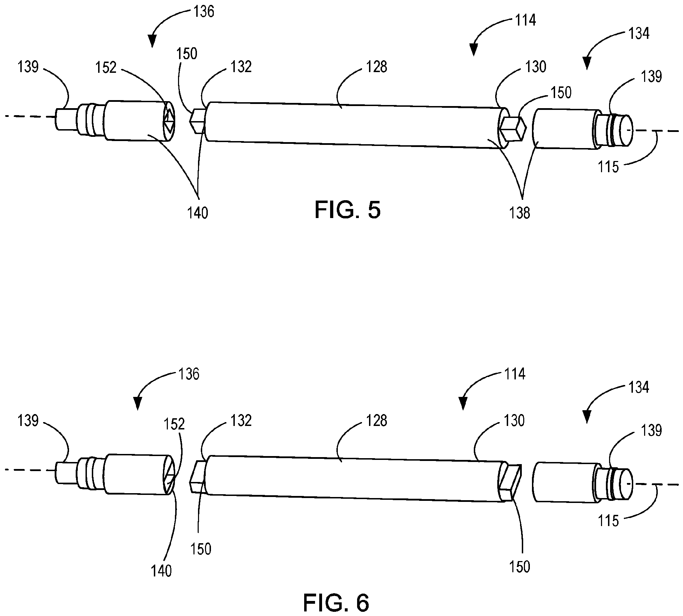

With reference to FIGS. 4-5, the first bearing zone 134 may be connected to the first end 130 of the work zone 128 via a first joint 138. Similarly, the second bearing zone 136 may be connected to the second end 132 of the work zone 128 via a second joint 140. In this manner, the first and second bearing zones 134, 136 can be formed as separate components from the work zone 128. In some embodiments, at least one the first and second bearing zones 134, 136 can be removably connected to the work zone 128 via the first and second joints 138, 140, respectively. For example, at least one of the first joint 138 and the second joint 140 is one of a butt joint, a tongue-and-groove joint, a threaded joint, and a pinned joint. As shown in FIGS. 5-6, one of the work zone 128 and the first/second bearing zones 134,136 may have a protrusion 150 that is configured to be received in a corresponding groove 152 on the other of the work zone 128 and the first/second bearing zones 134,136.

In further embodiments, at least one of the first and second bearing zones 134, 136 can be non-removably connected to the work zone 128 via the first and second joints 138, 140, respectively. For example, the first and second bearing zones 134, 136 can be non-removably connected to the work zone 128 by adhesive bonding, soldering, brazing, diffusion bonding, and other bonding techniques that would result in a non-removable connection of the first and second bearing zones 134, 136 to the work zone 128. The first and second joints 138, 140 are configured to maintain the alignment and concentricity of the work zone 128 and the first and second bearing zones 134, 136 relative to the longitudinal axis 115.

In some embodiments, the compaction roller 114 may have a composite structure. For example, at least one of the first bearing zone 134 and the second bearing zone 136 may be made from a material different than the material of the work zone 128. For example, the work zone 128 may be made from the SiC material, while the first bearing zone 134 and the second bearing zone 136 are made from metal. In this manner, the overall cost of the compaction roller 114 can be reduced without reducing the performance characteristics of the work zone 128. The work zone 128 can be made in a simple cylindrical shape, or other shape having a first portion of the first joint 138 and the second joint 140, while the first and second bearing zones 134, 136 can be machined to have a desired shape and a second portion of the first joint 138 and the second joint 140.

The compaction roller 114 can be manufactured by first making the work zone 128 in a desired shape and geometry, connecting the first and second bearing zones 134, 136 to the work zone 128 via the first and second joints 138, 140, respectively, and machining the first and second bearing zones 134, 136 to a desired shape and geometry using the work zone 128 as a reference datum. Such a manufacturing method ensures proper concentricity between the work zone 128 and the first and second bearing zones 134, 136.

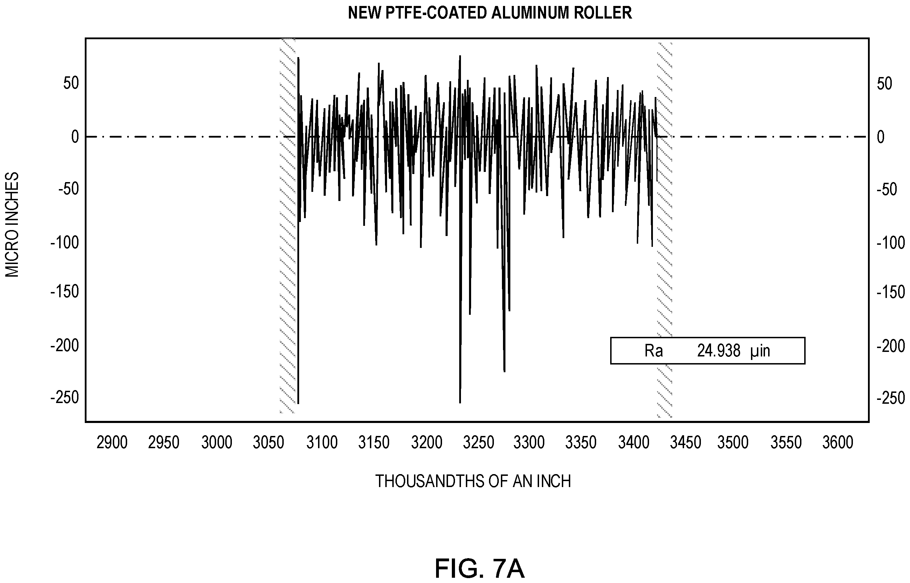

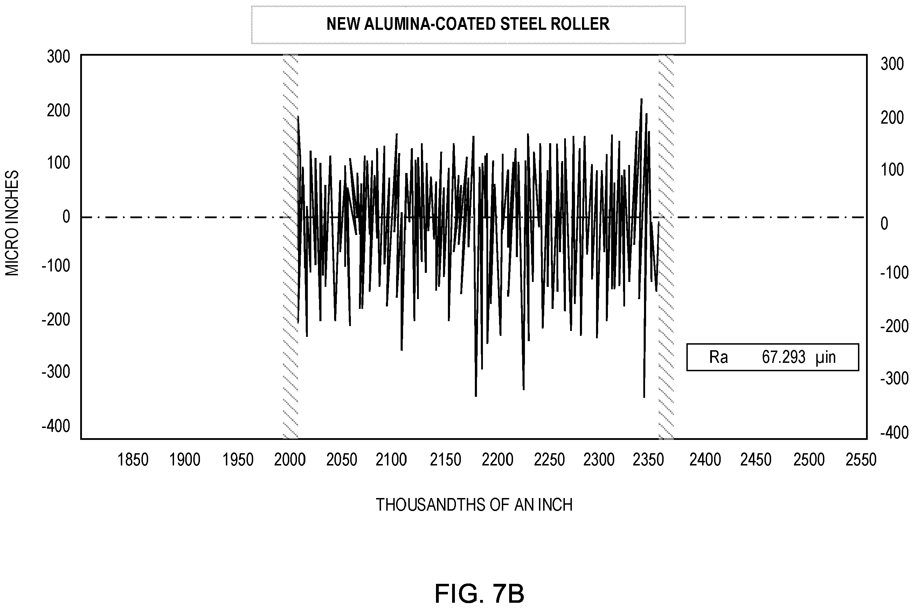

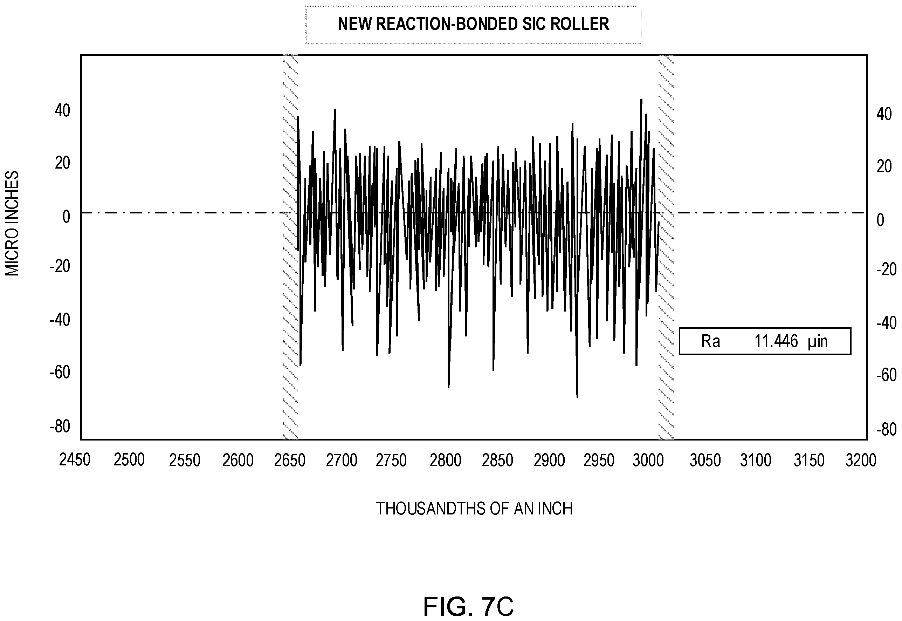

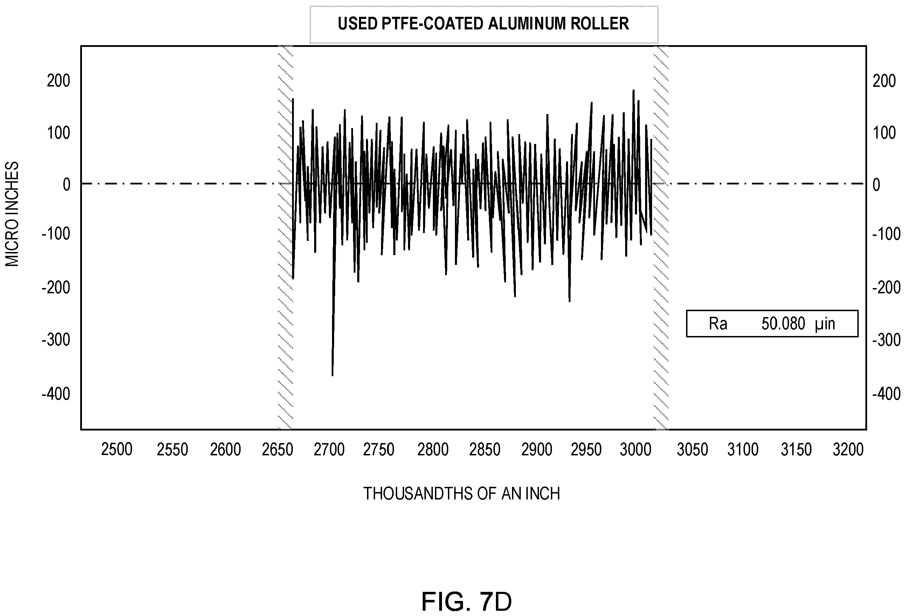

In some embodiments, at least a portion of the compaction roller 114 has a surface finish of less than 50 microinches Ra. For example, the work zone 128 may have a surface finish of less than 50 microinches Ra. In some embodiments, the entire compaction roller 114 may have a surface finish of less than 50 microinches Ra. Without intending to be bound by any theory, it has been found that a finer surface finish (i.e., a surface finish of less than 50 microinches Ra) of the compaction roller 114 yields an improved packing density of the powder material PM. FIGS. 7A-7C show surface roughness for new rollers made from PTFE-coated aluminum, alumina-coated steel, and reaction-bonded SiC, as measured on a Talysurf contact profilometer made by Taylor Hobson, Ltd. of Leicester, United Kingdom. FIG. 7D shows the surface roughness of a used PTFE-coated aluminum roller.

Although various embodiments or aspects have been described in detail for the purpose of illustration and description, it is to be understood that such detail is solely for that purpose and that embodiments or aspects are not limited to the disclosed embodiments or aspects, but, on the contrary, are intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect. In fact, many of these features can be combined in ways not specifically recited in the claims and/or disclosed in the specification. Although each dependent claim listed below may directly depend on only one claim, the disclosure of possible implementations includes each dependent claim in combination with every other claim in the claim set.

## Claims

1. A system for additive manufacturing of a three-dimensional object, the system comprising:
a powder compaction apparatus comprising at least one compaction roller configured to spread and compact a powder material across a powder bed; and
a printing apparatus configured to selectively bind or fuse the powder material;
wherein at least a portion of the at least one compaction roller is made from silicon carbide.

2. The system according to claim 1, wherein the silicon carbide is a reaction-bonded silicon carbide.

3. The system according to claim 1 or 2, wherein at least a portion of the at least one compaction roller has a surface finish of less than 50 microinches Ra.

4. The system according to any of claims 1-3, wherein the at least one compaction roller comprises a work zone having a first end and a second end, a first bearing zone extending from the first end of the work zone, and a second bearing zone extending from the second end of the work zone.

5. The system according to claim 4, wherein the work zone has a surface finish of less than 50 microinches Ra and/or wherein the work zone is cylindrical with a circular cross-section.

6. The system according to any of claims 4-5, wherein at least one of the first bearing zone and the second bearing zone are formed monolithically with the work zone.

7. The system according to any of claims 4-6, wherein at least one of the first bearing zone and the second bearing zone are made from a material different than the work zone.

8. The system according to any of claims 4-7, wherein the work zone is made from silicon carbide and wherein the first bearing zone and the second bearing zone are made from metal.

9. The system according to any of claims 1-8, wherein the compaction roller is configured to spin around a longitudinal axis and traverse in a direction perpendicular to the longitudinal axis.

10. The system according to any of claims 1-9, further comprising a powder dispensing apparatus configured to dispense a predetermined amount of the powder material on a top surface of the powder bed.

11. A system for additive manufacturing of a three-dimensional object, the system comprising:
a powder compaction apparatus comprising at least one compaction roller configured to spread and compact a powder material across a powder bed; and
a printing apparatus configured to selectively bind or fuse the powder material;
wherein the at least one compaction roller comprises a cylindrical work zone having a first end and a second end, a first bearing zone extending from the first end of the work zone, and a second bearing zone extending from the second end of the cylindrical work zone, and
wherein the cylindrical work zone is made from silicon carbide and has a surface finish of less than 50 microinches Ra.

12. A compaction roller configured for use in a system for additive manufacturing of a three-dimensional object, the compaction roller comprising:
a cylindrical work zone having a first end and a second end;
a first bearing zone extending from the first end of the work zone; and
a second bearing zone extending from the second end of the cylindrical work zone,
wherein at least the cylindrical work zone is made from silicon carbide, and
wherein the cylindrical work zone has a surface finish of less than 50 microinches Ra.

13. The compaction roller according to claim 12, wherein at least one of the first bearing zone and the second bearing zone are formed monolithically with the work zone.

14. The system according to any of claims 4-8 or 11 or the compaction roller according to claim 12 or 13, wherein the first bearing zone is connected to the first end of the work zone via a first joint, and wherein the second bearing zone is connected to the second end of the work zone via a second joint.

15. The system or compaction roller according to claim 14, wherein at least one of the first joint and the second joint is one of a butt joint, a tongue-and-groove joint, a threaded joint, and a pinned joint.
